# EUROPEAN PATENT APPLICATION

(11) **EP 2 921 742 A1**
(43) Date of publication of application: **23.09.2015**
(21) Application number: 14160948.7
(22) Date of filing: 20.03.2014
(51) Int. Cl.: F16F 15/26, F16C 33/64

(54) **Balancing assembly and internal combustion engine equipped with such an assembly**

(71) Applicant: Aktiebolaget SKF, 415 50 Göteborg (SE)
(72) Inventor: Maffucci, Julien, 37230 PERNAY (FR); Corbett, Richard, 37230 FONDETTES (FR); Hingouet, Gwenael, 37540 SAINT CYR SUR LOIRE (FR)
(74) Representative: Myon, Gérard Jean-Pierre

(57) **Abstract**

This balancing assembly (2) for an internal combustion engine comprises a balancing shaft (4) and at least two bearings for holding the balancing shaft in position with respect to a supporting structure (102) of the engine, each bearing comprising an inner ring (62) mounted around the balancing shaft, an outer ring (64) designed to interact with the supporting structure and balls (66) located in a bearing chamber (69) defined between the inner and outer rings. According to the invention, each bearing is an angular contact rolling bearing (6, 6') with a single row of balls (66) and at least one (64) of the inner ring (62) and the outer ring (64) is made of a drawn piece of metal.

## Description

### TECHNICAL FIELD OF THE INVENTION

The present invention relates to a balancing assembly for an internal combustion engine, such as an engine used in an automotive vehicle.

### BACKGROUND OF THE INVENTION

In the field of automotive vehicles, and more generally in the field of internal combustion engines, it is known to use a balancing shaft in order to compensate for the vibrations of the engine due to the movements of the pistons which can generate some acyclic perturbations. Such a balancing shaft is provided with an unbalancing mass and is driven by the crankshaft of the engine. Such a balancing shaft must be held in position with respect to a stationary structure of the engine, while being able to rotate around a rotation axis. In order to fulfil this function, it is known to use needle bearings to hold a balancing shaft with respect to a supporting structure.

Such needle bearings cannot withstand an axial load. Thus, it is necessary to limit, as much as possible, any axial load on a balancing shaft, in order to avoid a sliding movement of the needles within the bearing. On the other hand, some axial loads do apply on a balancing shaft because of the acyclic movements of the pistons and of the helical shape of the crankshaft pinion. Thus, at least under some working conditions, such an axial load applies on the balancing shaft. This results in an uneven loading of the needles, which become prematurely worn out.

### SUMMARY OF THE INVENTION

The invention aims at solving these problems with a new balancing assembly which is capable of withstanding axial and radial loads, with a low manufacturing cost.

To this end, the invention concerns a balancing assembly for an internal combustion engine, this balancing assembly comprising a balancing shaft and at least two bearings for holding the balancing shaft in position with respect to a supporting structure of the engine, each bearing comprising an inner ring mounted around the balancing shaft, an outer ring designed to interact with the supporting structure and balls located in a bearing chamber defined between the inner and outer rings. According to the invention, each bearing is an angular contact rolling bearing with a single row of balls and at least one of the inner ring and the outer ring is made of a drawn piece of metal.

Thanks to the invention, the angular contact rolling bearings of the balancing assembly allow it to hold the balancing shaft with a rotation possibility with respect to a supporting structure and to resist axial loads which can be irregular. Because of its structure including only one row of balls and one or two rings made of a drawn piece of metal, each angular contact rolling bearing has a reduced weight, as compared to standard needle bearings which generally include massive rings. Moreover, such an angular contact rolling bearing has a low manufacturing cost. Thus, the balancing assembly of the invention is lighter and more economical than the ones of the prior art.

According to further aspects of the invention which are advantageous but not compulsory, such a balancing assembly might incorporate one or several of the following features, taken in any technically compatible configuration:
- The outer ring is made of a drawn piece of metal.
- The inner ring is made of a drawn piece of metal.
- Both the inner and outer rings are made of a drawn piece of metal.
- The balancing assembly is equipped with only two bearings for holding its balancing shaft in position with respect to the supporting structure.
- A contact line, which joins the center of a ball of one bearing to the center of a contact zone defined between the ball and the ring made of a drawn piece of the one bearing, crosses a rotation axis of the balancing shaft at a point located with respect to a plane including the respective centers of the balls of the bearing, on the same side as a contact zone defined between the ball and the other ring and on the same side as another bearing.
- A first contact line, which joins the center of a first ball of a first bearing to the center of a first contact zone, and a contact line, which joins the center of second ball of a second bearing to the center of a second contact zone, cross each other at a point which is further from the respective centers of the first and second balls than the rotation axis.
- The inner ring of each bearing is press fitted on the balancing shaft.
- The inner ring of each bearing is wedged on the balancing shaft by cooperation of shapes.
- The inner ring includes a plastically deformable section which forms a bead engaged in a corresponding recess of the balancing shaft.
- The recess is a peripheral groove formed on a radial outer surface of the balancing shaft and the bead is a peripheral rib.
- The recess is formed of several notches distributed around the balancing shaft and the bead is formed of several portions, respectively engaged in the notches.

Finally, the invention also relates to an internal combustion engine which includes a balancing shaft driven in rotation by a crankshaft and held in position with respect to a supporting structure by at least two bearings. According to the invention, the balancing shaft and the bearings belong to a balancing assembly as mentioned here-above.

### BRIEF DESCRIPTION OF THE DRAWINGS

The invention will be better understood on the basis of the following description which is given in correspondence with the annexed figures as an illustrative example, without restricting the object of the invention. In the annexed figures:
- figure 1 is a perspective view of a balancing assembly according to the invention,
- figure 2 is a longitudinal cut view of the balancing assembly of figure 1 installed within an internal combustion engine which is partially represented,
- figure 3 is an enlarged view of detail III on figure 2 and
- figure 4 is a detailed view similar to figure 3 for a second embodiment of the invention.

### DETAILED DESCRIPTION OF SOME EMBODIMENTS

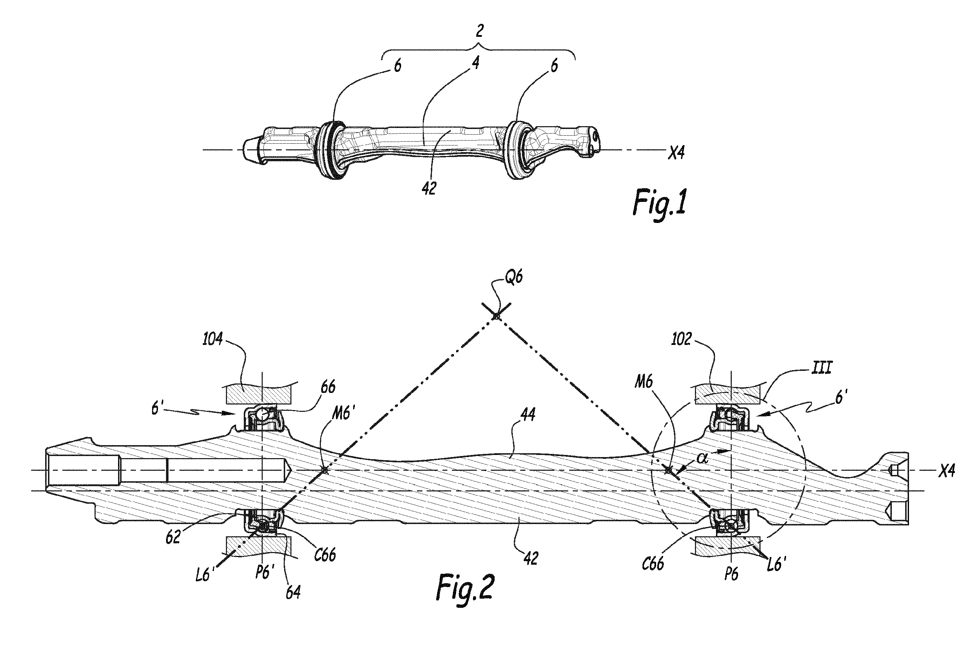

The balancing assembly 2 visible on figures 1 and 2 includes a balancing shaft 4 which is made of a single piece of metal and supposed to rotate around a longitudinal axis X4. Balancing shaft 4 is provided with an unbalancing mass 42 which allows it to compensate for vibrations due to the movements of the pistons of an internal combustion engine and which rotates around axis X4.

In order to fulfil its function, balancing shaft 4 must be mounted with respect to a fixed part of the internal combustion engine which is represented by two cylindrical holders 102 and 104 of a not further shown frame of this engine.

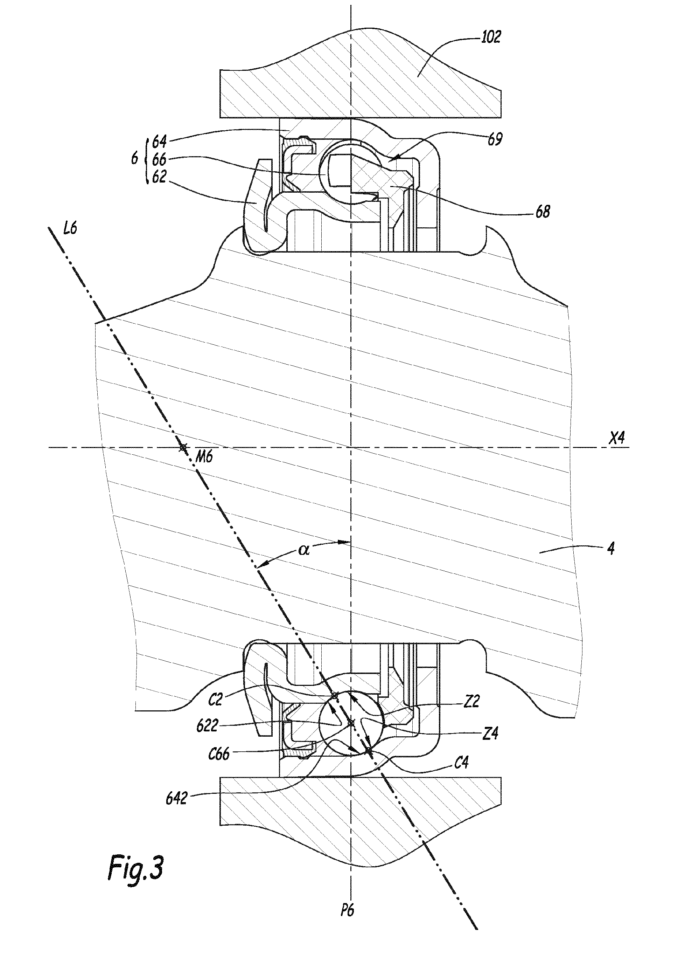

Two bearings 6 and 6' are mounted on balancing shaft 4 and belong to balancing assembly 2. These bearings respectively define the interface between balancing shaft 4 and holders 102 and 104 of the frame. These two bearings 6 and 6' are identical and the bearing 6 represented on the right of figure 2 is described in detail here-after, in connection with figure 3.

This bearing 6 includes an inner ring 62, an outer ring 64 and a single row of balls 66. The respective centers C66 of the balls 66 are included in a plane P6 which is perpendicular to axis X4.

Bearing 6 also includes a cage 68 which holds balls 66 in position within a rolling chamber 69 defined between rings 62 and 64.

Ring 62 is fixedly mounted on balancing shaft 4, whereas ring 64 is fixedly mounted within holder 102. Actually, ring 64 is designed to interact with the radial surface of holder 102 in order to block ring 64 within holder 102.

Bearing 6 is an angular contact rolling bearing, that is a bearing where contact zones, respectively between the balls 66 and the inner and outer rings 62 and 64, are not centered on plane P6. More precisely, one considers a first contact zone Z4 defined between a ball 66 and a raceway 642 formed by outer ring 4. One considers also a second contact zone Z2 defined between balls 66 and a raceway 622 formed by inner ring 62. One considers a straight line L6 joining the center C66 of a ball 66 and the center C4 of the first zone Z4 in the plan of figure 3. Line L6 also joins center C66 to the center C2 of zone Z2 or to a part of zone Z2 close to its center.

Line L6 is a contact line for balls 66 with rings 62 and 64 of bearing 6. This contact line defines an angle α with plane P6 which is different from 0. Actually, the value of angle α can be between 20° and 40°, preferably 25° and 35° preferably around 30°. The non-zero value of angle α corresponds to the fact that bearing 6 is an angular contact rolling bearing.

As shown on figure 3, line L6 crosses axis X4 at a point M6 which lies on the same side of plane P6 zone Z2, in particular its center C2. Moreover, point M6 is located, with respect to plane P6, on the same side as the other bearing 6' installed within holder 104. Along line L6, point M6 is located on the same side of the center C66 as zone Z2 and its center C2.

One considers a line L6' defined for bearing 6' as line L6 for bearing 6. This line L6' crosses axis X4 at a point M6'. This point M6' is located, with respect to a plane P6' including the centers C66 of the balls 66 of this bearing 6', on the same side as the center of a contact zone between a ball and the inner ring 62. This contact point M6' is also located between the two bearings 6 and 6'.

Q6 denotes a crossing point between lines L6 and L6'. This crossing point is further away from the centers C66 of the balls 66 of the two bearings 6 and 6' than points M6 and M6' and axis X4. On figure 2, the value of angle α is exaggerated as compared to its value on figure 3, in order to allow including point Q6 in this figure.

Outer ring 64 is made of a drawn piece of steel. Manufacturing outer ring 64 by a drawing process, sometime called embossing or stamping process, is both economic and fast. Moreover, a ring obtained in such a way is lighter than a massive ring, such as the ones generally used with needle bearings.

On the other hand, inner ring 62 is press fitted around balancing shaft 4. Mounting of ring 62 around balancing shaft 4 can be obtained by tight fit, or by a relative fit with a temperature difference between the shaft and the ring, the shaft being cooled or the ring being heated. The result of the press fitting of the inner ring 62 on the shaft 4 is that these two parts are fast in rotation and in translation with respect to one another.

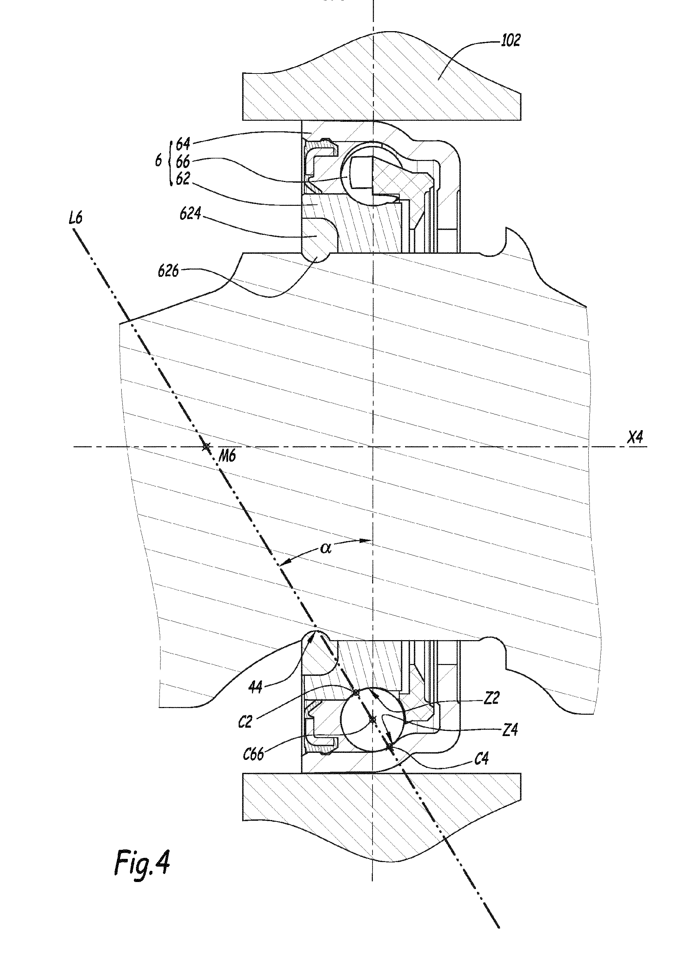

In the second embodiment of the invention represented on figure 4, the elements similar to the ones of the first embodiment bear the same references. Here-after, only the differences with the first embodiment are mentioned.

In the second embodiment, inner ring 62 is not press fitted on balancing shaft 4 but includes a section 624 made of malleable iron. On the other hand, balancing shaft 4 is provided, on its outer peripheral surface next to ring 62, with a peripheral groove 44. Upon mounting of bearing 6 on shaft 4, malleable section 624 is plastically deformed in order to push a bead 626, forming a peripheral rib and made of malleable iron, into groove 44. The result is that inner ring 62 is wedged onto balancing shaft 4 by cooperation of the respective shapes of bead 626 and groove 44. Ring 62 is thus firmly immobilized on shaft 4, both in rotation and in translation with respect to axis X4.

Alternatively, groove 44 can be replaced by several notches distributed around balancing shaft 4 and several discrete portions of section 624 are respectively engaged within these notches. These discrete portions together form a bead similar to bead 626 of the embodiment of figure 4.

According to a non-represented embodiment of the invention, inner ring 62 can also be made of a drawn, stamped or embossed metal part. In such a case, it is not compulsory that outer ring 64 is also made of a drawn, stamped or embossed piece of metal, even if this is advantageous

Because of the structure of the two bearings 6 and 6' of balancing assembly 2, only two bearings are sufficient to hold balancing shaft 4 in position with respect to the frame of an internal combustion engine. This is simpler and more economical than in cases where three or more bearings are used. However, in an alternative embodiment of the invention, and depending on the length of the balancing shaft 4, balancing assembly 2 can include three or more than three angular contact rolling bearings.

The features of the embodiments and alternative embodiments considered here-above can be combined in order to generate further embodiments of the invention.

## Claims

1. Balancing assembly (2) for an internal combustion engine, this balancing assembly comprising a balancing shaft (4) and at least two bearings (6, 6') for holding the balancing shaft in position with respect to a supporting structure (102, 104) of the engine, each bearing comprising an inner ring (62) mounted around the balancing shaft, an outer ring (64) designed to interact with the supporting structure and balls (66) located in a bearing chamber (69) defined between the inner and outer rings **characterized in that** each bearing is an angular contact rolling bearing (6, 6') with a single row of balls (66) and **in that** at least one (64) of the inner ring (62) and the outer ring (64) is made of a drawn piece of metal.

2. Balancing assembly according to claim 1, **characterized in that** the outer ring (64) is made of a drawn piece of metal.

3. Balancing assembly according to claim 1, **characterized in that** the inner ring (62) is made of a drawn piece of metal.

4. Balancing assembly according to claim 1, **characterized in that** both the inner and outer rings (62, 64) are made of a drawn piece of metal.

5. Balancing assembly according to any preceding claim, **characterized in that** it is equipped with only two bearings (6, 6') for holding its balancing shaft (4) in position with respect to the supporting structure (102, 104).

6. Balancing assembly according to any preceding claim, **characterized in that** a contact line (L6, L6'), which joins the center (C66) of a ball (66) of one bearing (6, 6') to the center (C4) of a contact zone (Z4) defined between the ball and the ring (64) made of a drawn piece of the one bearing, crosses a rotation axis (X4) of the balancing shaft at a point (M6, M6') located with respect to a plane (P6) including the respective centers (C66) of the balls (66) of the bearing, on the same side as a contact zone (Z2) defined between the ball and the other ring (62) and on the same side as another bearing (6', 6).

7. Balancing assembly according to claim 6, **characterized in that** a first contact line (L6), which joins the center (C66) of a first ball (66) of a first bearing (6) to the center (C4) of a first contact zone (Z4), and a contact line (L6'), which joins the center of second ball of a second bearing (6') to the center of a second contact zone, cross each other at a point (Q6) which is further from the respective centers (C66) of the first and second balls (66) than the rotation axis (X4).

8. Balancing assembly according to any preceding claim, **characterized in that** the inner ring (62) of each bearing (6, 6') is press fitted on the balancing shaft (4).

9. Balancing assembly according to any one of claims 1 to 7, **characterized in that** the inner ring (62) of each bearing (6, 6') is wedged on the balancing shaft (4) by cooperation of shapes (44, 646).

10. Balancing assembly according to claim 9, **characterized in that** the inner ring (62) includes a plastically deformable section (624) which forms a bead (626) engaged in a corresponding recess (44) of the balancing shaft.

11. Balancing assembly according to claim 10, **characterized in that** the recess is a peripheral groove (44) formed on a radial outer surface of the balancing shaft (4) and the bead is a peripheral rib (626).

12. Balancing assembly according to claim 11, **characterized in that** the recess is formed of several notches distributed around the balancing shaft (4) and the bead (626) is formed of several portions, respectively engaged in the notches.

13. Internal combustion engine including a balancing shaft (4) driven in rotation by a crankshaft and held in position with respect to a supporting structure (102, 104) of this engine by at least two bearings (6, 6'), **characterized in that** the balancing shaft (4) and the bearings (6, 6') belong to a balancing (2) assembly according to any preceding claim.
